Europäisches Patentamt

European Patent Office

Office européen des brevets

(19)

(11) EP 0 496 919 B1

(12) EUROPÄISCHE PATENTSCHRIFT

(45) Veröffentlichungstag und Bekanntmachung des Hinweises auf die Patenterteilung:
26.03.1997 Patentblatt 1997/13

(51) Int Cl.⁶: G06F 13/364

(21) Anmeldenummer: 91101296.1

(22) Anmeldetag: 31.01.1991

(54) **Verfahren zur zeitlichen Reihung von Zugriffen von Datenübertragungs- und Verarbeitungseinheiten auf einen Multiportbereich**

Method to chronologically order accesses of units for data transmission and processing to a multiport area

Méthode de mettre en ordre chronologique des accès des unités de transmission et traitement des données à une zone multiporte

(84) Benannte Vertragsstaaten:
AT BE CH DE ES FR GB IT LI NL SE

(43) Veröffentlichungstag der Anmeldung:
05.08.1992 Patentblatt 1992/32

(73) Patentinhaber: Siemens Nixdorf Informationssysteme Aktiengesellschaft
33102 Paderborn (DE)

(72) Erfinder: Grund, Berthold, Dipl.-Ing
W-8900 Augsburg 28 (DE)

(74) Vertreter: Fuchs, Franz-Josef, Dr.-Ing. et al
Postfach 22 13 17
80503 München (DE)

(56) Entgegenhaltungen:
EP-A- 0 239 979          EP-A- 0 374 521
WO-A-89/03561

- PATENT ABSTRACTS OF JAPAN vol. 10, no. 177 (P-470)(2233)
- 21. Juni 1986 & JP-A- 61 025 262 ( NEC CORP ) 4. Februar 1986
- PATENT ABSTRACTS OF JAPAN vol. 13, no. 1 (P-808)(3349) 6. Januar 1989 & JP-A- 63 211 059 ( MEIDENSHA ELECTRIC MFG ) 1. September 1988

**Beschreibung**

Die Erfindung betrifft ein Verfahren zur zeitlichen Reihung von Zugriffen verschiedener, fortlaufend numerierter Datenübertragungs- und Verarbeitungseinheiten auf einen eine Multiportsteuerung enthaltenden Multiportbereich.

Einzelne Datenübertragungs- und Verarbeitungseinheiten sind beispielsweise Mikroprozessoren oder sonstige Zentraleinheiten, die über ein eigenes Bussystem oder durch andere Daten-, Adreß- und Steuerleitungen mit ihnen zugeordneten Einheiten und pherieanschlüssen verbunden sind. Im allgemeinen kommunizieren diese Datenübertragungs- und Verarbeitungseinheiten intern synchron über einen eigenen Takt, aber auch eine asynchrone Kommunikation - beispielsweise mit Hilfe von sogenannten Hand-Shake-Leitungen - ist denkbar. Die solchermaßen bekannten Datenübertragungs- und Verarbeitungseinheiten bewältigen die ihnen zugewiesenen Aufgaben in einer durch ihren physikalischen Aufbau bestimmten Zeit. Um die Leistungsfähigkeit einer Datenübertragungs- und Verarbeitungseinheit zu erhöhen, faßt man mehrere solcher Einheiten zusammen und strebt das parallele Arbeiten dieser Einheiten an. Eine so ausgebildete Datenübertragungs- und Verarbeitungseinheit arbeitet dann mit Hilfe eines sogenannten Mehrprozessorsystems. Damit die Einheiten des Mehrprozessorsystems untereinander Daten austauschen können und gemeinsam von allen nutzbare Peripheriegeräte eingesetzt werden können, bedient man sich eines sogenannten Multiportbereichs.

Ein Multiportbereich ist ein von allen zu einem Mehrprozessorsystem zusammengeschlossenen Datenübertragungs- und Verarbeitungseinheiten gemeinsam nutzbares Bussystem. Diesem Bussystem ist ein eigener Speicherbereich zugeordnet. Sind zentral verfügbare Peripheriegeräte vorgesehen, dann integriert man in den Multiportbereich auch eine zentrale Ein-/Ausgabeschnittstelle. Für den Datenaustausch zwischen den einzelnen Datenübertragungs- und Verarbeitungseinheiten ist nur der gemeinsam nutzbare Speicherbereich erforderlich. Dieser ist beispielsweise in vereinbarungsgemäß festgelegte Teilbereiche aufgeteilt, über die dann die Datenübertragung von einer Datenübertragungs- und Verarbeitungseinheit zur anderen erfolgen kann.

Auf den Multiportbereich darf zur gleichen Zeit stets nur eine Datenübertragungs- und Verarbeitungseinheit zugreifen, damit Datenkollisionen vermieden werden. Um dies zu gewährleisten bedient man sich einer Prioritätssteuerung, die auch als Arbiter bezeichnet wird.

In der Zeitschrift "Elektronik" 8/1980, Seite 65 ff. werden einige Bus-Arbiter beschrieben. Grundsätzlich werden dezentrale und zentrale Arbiter unterschieden. Bei dezentralen Arbitern, die entweder nach dem Daisy-Chain-Verfahren oder nach dem Parallel-Polling-Verfahren arbeiten, ist in jeder Datenübertragungs- und Verarbeitungseinheit eine Vorrichtung vorzusehen, die selbsttätig entscheiden kann, ob die ihr zugeordnete Datenübertragungs- und Verarbeitungseinheit auf das gemeinsame Bussystem zugreifen darf. Dies bedeutet zumindest im Falle des Parallel-Polling erheblichen schaltungstechnischen und leitungstechnischen Aufwand. Jeder Datenübertragungs- und Verarbeitungseinheit ist eine Nummer zugeordnet, die im Anfangszustand seiner Priorität entspricht. Nach erfolgtem Zugriff auf das gemeinsame Bussystem wird die Einheit aus der durch die Nummer vorgegebenen Prioritätsfolge herausgelöst und erhält unabhängig von der ihr zugeordneten Nummer die niedrigste Priorität. Die nächstfolgenden Nummern rücken auf. Als Vorteil des dezentralen Arbiters wird die Schnelligkeit des Arbiters genannt, der bei entsprechender Technologie Zuteilungsentscheidungen im Nannosekundenbereich treffen kann.

Ein zentraler Arbiter ermöglicht die Implementierung verschiedenster Zuteilungsstrategien. Allerdings ist dies mit dem im genannten Stand der Technik angeführten Nachteil behaftet, daß durch die Zentralisierung der Entscheidungsfunktion Zeitprobleme geschaffen werden.

Aus EP 0 374 521 A2 ist ein System zur Zugriffsvergabe auf ein von mehreren Datenübertragungs- und Verarbeitungseinheiten genutztes Bussystem bekannt. Anhand einer Prioritätssteuerung wird nach einem Zugriff auf das Bussystem der zugreifenden Einheit die niedrigste Priorität zugeteilt. Die Prioritäten der übrigen Einheiten werden nachgeführt.

In WO-A-89 03561 ist ein Computerkopplungssystem beschrieben, das mit Hilfe eines zentralen Arbiters direkte Zugriffe von einem Computer zu einem anderen, ebenfalls an das Kopplungssystem angeschlossenen Computer, steuert. Der Arbiter arbeitet nach einem rotierenden Prioritätsschema, bei dem der Computer, dem zuletzt höchste Priorität zugeteilt war, anschließend die niedrigste Priorität erhält, und der gemäß einer festgelegten Reihenfolge nächstfolgende Computer die höchste Priorität erhält. Ist aktuell einem Computer der Zugriff zu einem anderen Computer zugeteilt, dann werden Zugriffswünsche von weiteren Computern abgewiesen. Die Zugriffswünsche werden in eine Warteliste eingetragen.

Durch das Abweisen eines Zugriffswunsches wird dem betroffenen Computer die Möglichkeit gegeben, sich bis zur Erfüllung des Zugriffswunsches anderen Aufgaben zuzuwenden. Dies ist jedoch unter Umständen nur dann möglich, wenn der Datenpuffer an der Schnittstelle zum Computerkopplungssystem dazu geeignet ist, die gesamten zu übertragenden Daten zwischenzuspeichern. Die der Erfindung zugrundeliegende Aufgabe besteht darin, ein Verfahren aufzuzeigen, das es ermöglicht, zeitgleich sämtliche Zugriffswünsche von Datenübertragungs- und Verarbeitungseinheiten zu erfüllen, um eine Blockierung einer Datenübertragungs- und Verarbeitungseinheit wegen eines vollen Datenpuffers wirksam zu verhindern.

Diese Aufgabe wird durch die im Patentanspruch 1 angegebenen Verfahrensschritte gelöst.

Ausgangspunkt des Verfahrens ist ein Grundzustand, in dem sich die Datenverarbeitungsanlage befindet. Beispielsweise wird dieser Grundzustand mit Hilfe eines sogenannten Boot-Algorithmus hergestellt. Dieser Algorithmus legt bei Inbetriebnahme des Mehrprozessorsystems die Betriebszustände der einzelnen Einheiten fest. Im Grundzustand ist der dem Multiportbereich zugeordnete Speicherbereich leer, die Prioritäten der einzelnen Datenübertragungs- und Verarbeitungseinheiten sind in der Prioritätsliste zum Beispiel gemäß ihrer Nummernfolge festgelegt und die Schnittstellenbausteine sind deaktiviert. Im Grundzustand wird also der Datenübertragungs- und Verarbeitungseinheit Nummer 1 die höchste Priorität zugeteilt, der Nummer 2 die zweithöchste, usw..

Jede Datenübertragungs- und Verarbeitungseinheit, die auf den Multiportbereich zugreifen will, hat über eine Steuerleitung die Möglichkeit, ihren Zugriffswunsch an den Multiportbereich zu übermitteln. Die Steuerleitung ist zu diesem Zweck mit einem Anforderungseingang der Multiportsteuerung des Multiportbereichs verbunden. Jeder Anforderungseingang ist einer bestimmten Datenübertragungs- und Verarbeitungseinheit zugeordnet, wodurch ein an diesem Eingang ankommendes Signal eindeutig identifizierbar ist. Das Signal kann ein einzelner z.B. positiver Impuls sein. Für den Fall, daß mit einer Steuerleitung verschiedene an den Bus angeschlossene Einheiten ansprechbar sein sollen, ist auch ein in Form einer Bitfolge codiertes Signal verwendbar. Voraussetzung dafür ist lediglich, daß der Anforderungseingang so ausgestaltet ist, daß er ein solches Signal interpretieren kann.

Die Multiportsteuerung reagiert auf ein einen Zugriffswunsch anzeigendes Signal durch das Übermitteln eines Quittungssignals an die entsprechende Datenübertragungs- und Verarbeitungseinheit. Auch für die Übertragung dieses Quittungssignals steht ein eigener Leitungspfad zur Verfügung. In den meisten Fällen wird als Leitungspfad auch physikalisch eine Leitung zur Verfügung stehen. Im allgemeinen lassen sich aber auch hier durch bidirektionale oder aufgrund des gewählten Übertragungsverfahrens mehrfach nutzbare Leitungen vorsehen. Die Datenübertragungs- und Verarbeitungseinheit wird durch das Quittungssignal in einen Wartezustand versetzt. Dieser Wartezustand entspricht einem Zustand, in den eine Datenübertragungs- und Verarbeitungseinheit gelangt, wenn sie einen Zugriffswunsch an einen Partner geäußert hat und dieser Partner ihr signalisiert, daß dieser Zugriffswunsch erfüllt wird. Zum Beginn des eigentlichen Datentransfers ist lediglich noch der Empfang eines zweiten Quittungssignals erforderlich.

Bevor die Multiportsteuerung aber ein solches zweites Quittungssignal an eine Datenübertragungs- und Verarbeitungseinheit überträgt, stellt sie fest, ob ein Zugriff möglich ist und welche Datenübertragungs- und Verarbeitungseinheit als nächste zugreifen darf.

Die Multiportsteuerung ist erfindungsgemäß so aufgebaut, daß sie alle erforderlichen Überprüfungen parallel zur gleichen Zeit durchführen kann. Es wird überprüft, ob grundsätzlich ein Zugriff möglich ist. Ein Zugriff auf den Multiportbereich ist grundsätzlich immer dann möglich, wenn gerade kein Datenaustausch mit dem Multiportbereich erfolgt. Dies resultiert aus der Tatsache, daß immer nur eine Datenübertragungs- und Verarbeitungseinheit auf den Multiportbereich zugreifen darf, um Datenkollisionen zu verhindern. In einer zweiten Überprüfung wird festgestellt, ob an den Anforderungseingängen der Multiportsteuerung mehrere Zugriffswünsche vorliegen. Ist dies der Fall, dann muß die Multiportsteuerung mit Hilfe der aktuellen Prioritätsliste feststellen, welcher Zugriffswunsch zuerst zu erfüllen ist. Dabei gibt es zwei Möglichkeiten:

1. Eine der anfordernden Datenübertragungs- und Verarbeitungseinheiten hat aktuell die höchste Priorität. In diesem Fall darf diese Einheit als erste zugreifen.
2. Keine der anfordernden Datenübertragungs- und Verarbeitungseinheiten hat in der aktuellen Prioritätsliste die höchste Priorität. Jetzt darf diejenige Einheit zuerst zugreifen, die als nächste auf die Einheit mit der höchsten Priorität folgt. Beispielsweise hat die Einheit mit der Nummer 2 die höchste Priorität und die Einheiten 4 und 1 haben einen Zugriffswunsch geäußert, dann darf die Einheit 4 als erste zugreifen.

Geht man davon aus, daß fünf Einheiten an den Multiportbereich angeschlossen sind, wobei die Einheit 5 die höchste Priorität in der aktuellen Prioritätsliste hat und die Einheiten Einheitenmit den Nummern 1 und 4 die jeweils anfordernden sind, dann darf die Einheit 1 zuerst zugreifen. In diesem Sinne besteht also ein Ringschluß der angeschlossenen Einheiten innerhalb der Prioritätsliste.

Für den Fall, daß nur eine Datenübertragungs- und Verarbeitungseinheit gegenüber dem Multiportbereich einen Zugriffswunsch äußert, wird dieser Zugriffswunsch sofort erfüllt, ohne daß sich der Eintrag in der aktuellen Prioritätsliste auswirkt.

Zur Erfüllung des Zugriffswunsches übermittelt die Multiportsteuerung an die ausgewählte Datenübertragungs- und Verarbeitungseinheit das zweite Quittungssignal. Das erste und das zweite Quittungssignal können über den gleichen Leitungspfad - beispielsweise durch jeweils einen Spannungspegelwechsel - übertragen werden. Mit dem Empfang des zweiten Quittungssignals beginnt der Datenaustausch. Die Multiportsteuerung überwacht, ob der Vorgang der Datenübertragung bereits abgeschlossen ist. Dieser Vorgang wird durch Übertragung eines den Zugriffswunsch beendenden Signals an die Multiportsteuerung beendet. Dieses Signal ist beispielsweise ein Pegelwechsel am Anforderungseingang der Multiportsteuerung oder die Übertragung eines speziellen Bitmusters dorthin.

Liegt nach Ende des Zugriffs eine Anforderung einer weiteren Datenübertragungs- und Verarbeitungseinheit vor, dann wird nach dem beschriebenen Verfahren innerhalb kürzester Zeit, beispielsweise eine Taktperiode, ein weiterer Datenaustausch möglich.

Während jedes Zugriffs auf den Multiportbereich wird die Prioritätsliste aktualisiert. Sie ist ein wesentliches Element der Multiportsteuerung. Die Prioritätsliste kann beispielsweise mit Hilfe eines Registers realisiert werden. In das Register sind gemäß ihrer dem Ausgangspunkt des Verfahrens entsprechenden Prioritätsreihenfolge die anschließbaren Datenübertragungs- und Verarbeitungseinheiten eingetragen. Zu Beginn des Verfahrens weist ein Registerzeiger auf den Registerspeicherplatz, in dem die Nummer der Einheit mit höchster Priorität abgelegt ist. Mit Abschluß des ersten Zugriffs auf den Multiportbereich weist der Registerzeiger auf den Registerspeicherplatz, in dem die Nummer der auf die zuerst zugreifende Einheit folgenden Einheit gespeichert ist. Hat beispielsweise die Einheit 4 zuerst auf den Multiportbereich zugegriffen, dann weist der Registerzeiger nach diesem Zugriff auf den Registerspeicherplatz, in dem die Nummer der Einheit 5 abgelegt ist. Geht man wiederum von fünf angeschlossenen Einheiten aus, dann weist der Registerzeiger nach einem Zugriff der Einheit 5 auf den Multiportbereich auf denjenigen Registerspeicherplatz, in dem die Nummer der Einheit 1 gespeichert ist. Der Registerzeiger wird nach jedem Zugriff umgesetzt, es sei denn, daß eine Einheit mehrmals in Folge auf den Multiportbereich zugreift. Dies resultiert aus der Tatsache, daß nach Zugriff einer bestimmten Einheit stets einer anderen bestimmten Einheit höchste Priorität zugeteilt wird.

Ein mehrmaliges Zugreifen einer Einheit auf den Multiportbereich ist sehr wahrscheinlich, da die Länge eines einzelnen Zugriffs - beispielsweise auf ein Wort - beschränkt ist. Auf Grund dieser Längenbeschränkung der einzelnen Datenpakete führt das Quittungssignal, das den Wartezustand der Datenübertragungs- und Verarbeitungseinheit auslöst, nicht zu einer gravierenden Verlangsamung des Mehrprozessorsystems. Die einzelnen Datenübertragungs- und Verarbeitungseinheiten greifen unter Umständen dauernd ineinander "verschachtelt" auf den Multiportbereich zu. Eine störende Verlangsamung der Prozeßabläufe kann erst bei einer wachsenden Anzahl von angeschlossenen Datenübertragungs- und Verarbeitungseinheiten auftreten. Wird deren Zahl aber auf ein Höchstmaß begrenzt, dann ist die maximale Verzögerung der einzelnen Datenübertragungs- und Verarbeitungseinheiten kalkulierbar. Insgesamt ergibt sich durch das aufgezeigte Verfahren zur Reihung von Zugriffen ein Zeitgewinn und damit eine Erhöhung der sogenannten Performance des Mehrprozessorsystems. Diese Erhöhung geht einher mit einem aufgrund des zentralen Arbiters verhältnismäßig geringen schaltungstechnischen Aufwand. Durch die "Verzahnung" bzw. Verschachtelung der einzelnen Zugriffe ineinander wird eine Blockierung wegen eines vollen Datenpuffers einer Datenübertragungs- und Verarbeitungseinheit wirksam verhindert.

Im Spezialfall von nur zwei an den Multiportbereich angeschlossenen Datenübertragungs- und Verarbeitungseinheiten könnte die Multiportsteuerung auch durch ein Toggle-Flip-Flop ersetzt werden. Dieses Toggle-Flip-Flop würde, von einem Takt getriggert, den Zugriff zuteilen; beispielsweise in der ersten Taktperiode der ersten Einheit, in der zweiten Taktperiode der zweiten Einheit usw.. Kommt ein Zugriffswunsch von nur einer Einheit, dann muß diese unter Umständen auf die nächste Taktperiode warten, in der ihr die höchste Priorität zugeteilt wird. Im vorgestellten Verfahren mit Prioritätsliste kann die einzige anfordernde Einheit ohne zusätzliche Wartezeit auf den Multiportbereich zugreifen. Dies gilt auch bei einer großen Anzahl angeschlossener Datenübertragungs- und Verarbeitungseinheiten.

Gemäß einer Ausgestaltung und Weiterbildung des erfindungsgemäßen Verfahrens besteht die Multiportsteuerung aus einer die Prioritätsliste enthaltenden Prioritätssteuerung und wenigstens zwei Schnittstellenbausteinen. Die Prioritätssteuerung überträgt nach Prüfung der Zugriffsvergabebedingungen ein Auswahlsignal an den der ausgewählten Datenübertragungs- und Verarbeitungseinheit zugeordneten Schnittstellenbaustein. Dieser Schnittstellenbaustein wird dadurch aktiviert und übermittelt das zweite Quittungssignal an die Datenübertragungs- und Verarbeitungseinheit.

Schnittstellenbausteine sind beispielsweise Bustreiber, Adreßumsetzer und gegebenenfalls Synchronisierungsschaltungen. Die Schnittstellenbausteine können Logikschaltungen enthalten, die Steueraufgaben zur - zum Takt des Multiportbereichs - Generierung der Quittungssignale und anderer Steuersignale dienen. Die einzelnen Elemente der Schnittstellenbausteine werden durch das von der Prioritätssteuerung erzeugte Auswahlsignal aktiviert, d.h., daß beispielsweise die einzelnen integrierten Schaltkreise ein sogenanntes Chip-Select-Signal erhalten, mit Spannung versorgt werden und/oder ihre Takteingänge mit einem Takt beaufschlagt werden.

Diese Aktivierung wird durch ein Rücksetzen des Auswahlsignals - beispielsweise ein Pegelwechsel von "High" nach "Low" - beendet.

Gemäß einer weiteren Weiterbildung und Ausgestaltung des erfindungsgemäßen Verfahrens werden vor Zugriffsvergabe auf den Multiportbereich von der Prioritätssteuerung auch Anforderungseingänge abgefragt, die anderen Prioritätsebenen zugeordnet sind. Das Auswahlsignal wird dem Schnittstellenbaustein übermittelt, der derjenigen Datenübertragungs- und Verarbeitungseinheit zugeordnet ist, die unter den anfordernden Datenübertragungs- und Verarbeitungseinheiten der höchsten Prioritätsebene zugeordnet ist und innerhalb dieser Prioritätsebene die höchste Priorität hat. Jede Prioritätsebene erhält eine eigene Prioritätsliste.

Die Zugriffsvergabe erfolgt nach dem erfindungsgemäßen Verfahren, jedoch mit absolutem Vorrang von Zugriffen, die von Datenübertragungs- und Verarbeitungseinheiten einer höheren Prioritätsebene kommen. Es muß lediglich das Ende eines laufenden Zugriffs auch aus einer niedrigeren Prioritätsebene abgewartet werden.

Gemäß einer weiteren Weiterbildung und Ausgestaltung des erfindungsgemäßen Verfahrens empfängt - bei Asynchronität des Taktes einer Datenübertragungs- und Verarbeitungseinheit und des Taktes des Multiportbereichs - der der jeweiligen Datenübertragungs- und Verarbeitungseinheit zugeordnete Schnittstellenbaustein, das einen Zugriffswunsch anzeigende Signal asynchron zum Takt des Multiportbereichs. Das den Wartezustand in der Datenübertragungs- und Verarbeitungseinheit auslösende Quittungssignal wird unter Einhaltung der für die Datenübertragungs- und Verarbeitungseinheit vorgeschriebenen Zeitintervalle asynchron übermittelt. Ebenso empfängt dieser Schnittstellenbaustein das den Zugriffswunsch beendende Signal asynchron und überträgt daraufhin ein drittes Quittungssignal an die Datenübertragungs- und Verarbeitungseinheit. Das dritte Quittungssignal kann eine spezielle Bitfolge oder ein bestimmter Pegel (Low bzw. High) oder Tristate an einem mit der Datenübertragungs- und Verarbeitungseinheit verbundenen Anschluß des Multiportbereichs sein.

Mit Hilfe dieser Weiterbildungen ist es möglich, Datenübertragungs- und Verarbeitungseinheiten, deren interner Takt gegenseitig nicht synchron ist, über den Multiportbereich zusammenzuschalten. Für die Reaktion auf ein beliebiges Signal aus einer Datenübertragungs- und Verarbeitungseinheit ist spezifisch für jede dieser Einheiten eine bestimmte Reaktionszeit festgelegt. Diese Reaktionszeit ist im ungünstigen Fall so kurz, daß beispielsweise der asynchron zum Takt einer Datenübertragungs- und Verarbeitungseinheit arbeitende Multiportbereich nicht schnell genug auf einen Zugriffswunsch reagieren würde. Durch geeignete Einrichtungen innerhalb der jeweiligen, der Datenübertragungs- und Verarbeitungseinheit zugeordneten Synchronisierungsschaltung kann die gesetzte Zeitbedingung jedoch eingehalten werden. Erhält ein Anforderungseingang das den Zugriffswunsch anzeigende Signal einer Datenübertragungs- und Verarbeitungsanlage, dann wird unabhängig vom Takt des Multiportbereichs durch die entsprechende Schaltung der Schnittstelle automatisch das den Wartezustand auslösende Quittungssignal an die Datenübertragungs- und Verarbeitungseinheit gesendet. Der Zugriffswunsch geht auf diese Weise keinesfalls verloren.

Im folgenden wird ein Ausführungsbeispiel der Erfindung anhand der Zeichnung näher erläutert. Dabei zeigen

FIG 1 ein Ablaufdiagramm des erfindungsgemäßen Verfahrens,

FIG 2 die Prinzipdarstellung einer Prioritätsliste,

FIG 3 das Blockschaltbild eines Mehrprozessorsystems mit zwei an einen Multiportbereich angeschlossenen Einheiten,

FIG 4 einen Schnittstellenbaustein zum Multiportbereich

FIG 5 ein Impulsdiagramm für Zugriffe von Einheiten aus einer Prioritätsebene und

FIG 6 ein Impulsdiagramm für Zugriffe aus zwei Prioritätsebenen.

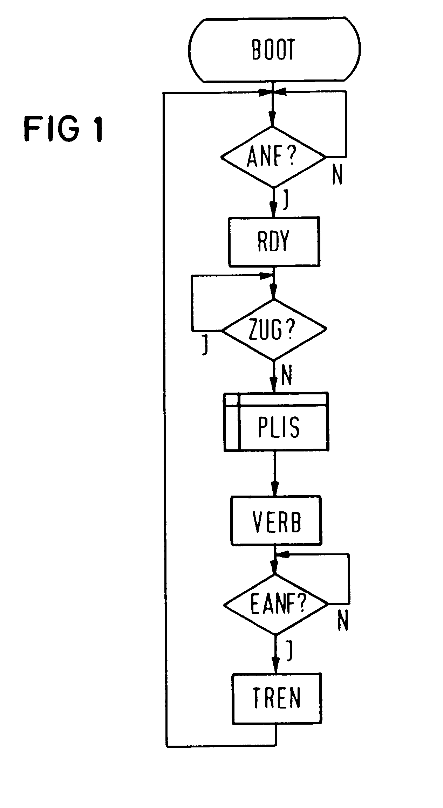

FIG 1 zeigt ein Ablaufdiagramm zum Verfahren zur zeitlichen Reihung von Zugriffen von Datenübertragungs- und Verarbeitungseinheiten DAT (kurz: Einheiten) auf einen Multiportbereich MUPO. Bei Inbetriebnahme eines Mehrprozessorsystems müssen alle in diesem Mehrprozessorsystem arbeitenden Einheiten in einen definierten Grundzustand versetzt werden. Diesen Zustand stellt man durch den Ablauf eines sogenannten Bootalgorithmus BOOT her. Für den Multiportbereich MUPO bedeutet dies, daß ein Speicher MEM leer ist, Schnittstellenbausteine INT zu den verschiedenen Datenübertragungs- und Verarbeitungseinheiten DAT deaktiviert sind und ein Zeiger AR auf die erste eingetragene Nummer einer Datenübertragungs- und Verarbeitungseinheit DAT in einer Prioritätsliste PLIS zeigt. Mit Beendigung des Bootalgorithmus BOOT wartet eine Multiportsteuerung MUST auf das Vorliegen einer Anforderung ANF. Liegt eine solche Anforderung ANF vor, dann wird ein Quittungssignal RDY erzeugt. Dieses Quittungssignal RDY versetzt die anfordernde Datenübertragungs- und Verarbeitungseinheit DAT in einen Wartezustand. Dabei ist es möglich, daß gleichzeitig mehrere Anforderungen ANF von verschiedenen Datenübertragungs- und Verarbeitungseinheiten DAT eintreffen. Jede dieser Anforderungen wird mit einem Quittungssignal RDY beantwortet. Eine Prioritätssteuerung PRIO überprüft nun, ob für eine der angeschlossenen Datenübertragungs- und Verarbeitungseinheiten DAT ein Auswahlsignal SELECT aktiv ist. Damit stellt die Prioritätssteuerung PRIO fest, ob aktuell ein Zugriff ZUG auf den Multiportbereich MUPO stattfindet. Ist dies der Fall, so wartet die Prioritätssteuerung PRIO solange, bis der Zugriff ZUG beendet ist. Liegt kein Zugriff ZUG mehr vor, wird mit Hilfe der Prioritätsliste PLIS festgestellt, welche der anfordernden Datenübertragungs- und Verarbeitungseinheiten DAT höchste Priorität hat. Diese Einheit DAT wird nun mit dem Multiportbereich MUPO verbunden. Um diese Verbindung VERB herzustellen, generiert die Prioritätssteuerung PRIO das Auswahlsignal SELECT und aktiviert damit den entsprechenden Schnittstellenbaustein INT. Mit dem Herstellen der Verbindung VERB wird auch die Prioritätsliste PLIS aktualisiert. Während der laufenden Verbindung überwacht die Multiportsteuerung MUST, ob das Ende der Anforderung EANF erreicht ist. Ist dies der Fall, dann wird die Datenübertragungs- und Verarbeitungsanlage DAT vom Multiportbereich MUPO getrennt. Mit der Trennung TREN wird das Verfahren beendet und im Falle einer weiteren Anforderung ANF wiederholt.

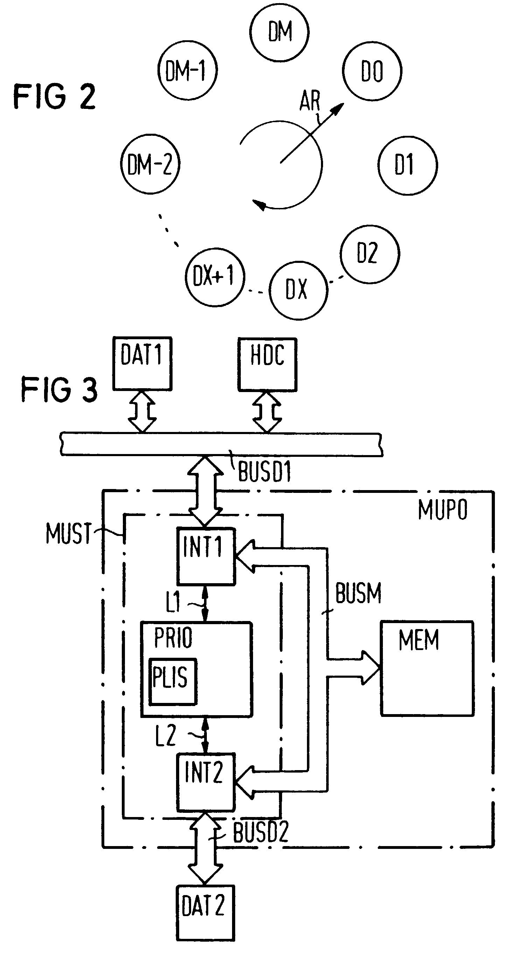

FIG 2 zeigt die Prinzipdarstellung einer Prioritätsliste PLIS. Sämtliche Speicherplätze der Prioritätsliste PLIS sind auf einem Kreis liegend dargestellt. In jeden dieser Speicherplätze ist die Nummer D0, D1, D2....DX, DX+1....DM-2, DM-1, DM einer an den Multiportbereich MUPO angeschlossenen Datenübertragungs- und Verarbeitungseinheit DAT eingetragen. Ein von der Kreismitte zum Kreisumfang weisender Zeiger AR zeigt auf die Nummer D0 der ersten Datenübertragungs- und Verarbeitungseinheit DAT1. Diese Zeigerstellung bedeutet, daß der Nummer D0 höchste Priorität zugeteilt ist. Richtet nun die Datenübertragungs- und Verarbeitungseinheit DAT mit der Nummer DX, die zwischen den Datenübertragungs- und Verarbeitungseinheiten DAT mit den Nummern D2 und DM-2 angeordnet ist, eine Anforderung ANF an den Multiportbereich MUPO und liegt gleichzeitig eine Anforderung ANF der Nummer DM-1 vor, dann wird die Einheit DATX mit der Nummer DX mit dem Multiportbereich MUPO verbunden. Während dieser Verbindung VERB rotiert der Zeiger AR im Uhrzeigersinn zum Speicherplatz, in dem die Nummer DX+1 eingetragen ist. Nach Beendigung des Zugriffs der Einheit DATX mit der Nummer DX hat also diese Einheit DATX die niedrigste, die Einheit DAT X+1 mit der nachfolgenden Nummer DX+1 die höchste und die nachfolgenden Einheiten DAT gemäß ihrer Numerierung geordnete Prioritäten.

In FIG 3 wird ein möglicher Aufbau eines Mehrprozessorsystems mit zwei an den Multiportbereich MUPO angeschlossenen Datenübertragungs- und Verarbeitungseinheiten DAT1, DAT2 in schematischer Darstellung gezeigt. Die erste Datenübertragungs- und Verarbeitungseinheit DAT1 ist über einen Bus BUSD1 mit einem Schnittstellenbaustein INT1 des Multiportbereichs MUPO verbunden. An diesen Bus BUSD1 ist mindestens noch eine weitere Steuereinheit HDC angeschlossen. Diese Steuereinheit kann spielsweise ein Harddisk-Controller HDC sein. Die zweite Datenübertragungs- und Verarbeitungseinheit DAT2 ist über einen weiteren Schnittstellenbaustein INT2 mit dem Multiportbereich MUPO verbunden. Über Busse BUSD1 und BUSD2 wird die gesamte Kommunikation zwischen den Datenübertragungs- und Verarbeitungseinheiten DAT1, DAT2 und dem Multiportbereich MUPO abgewickelt. Die Busse BUSD1, BUSD2 enthalten also sowohl Steuer-, Adreß- und Datenleitungen. Die Schnittstellenbausteine INT1, INT2 übernehmen Pegelumsetzungs-, Adreßumsetzungs-, Steuerungs- und Synchronisationsaufgaben. Sie geben Adreß- und Dateninformationen an einen Multiportbus BUSM des Multiportbereichs MUPO weiter und empfangen Daten aus dem Multiportbus BUSM und geben diese entsprechend umgesetzt an die angeschlossenen Busse BUSD1, BUSD2 weiter. Die Steuersignale gelangen über Leitungen L1 und L2 zur Prioritätssteuerung PRIO. Diese verarbeitet die sie erreichenden Steuersignale und gibt sie über die Leitungen L1, L2 Informationen an die Schnittstellenbausteine ab. Diese Informationen gewinnt die Prioritätssteuerung PRIO unter anderem durch Abfrage der in ihr enthaltenen Prioritätsliste PLIS. Der Multiportbus BUSM ist auch mit einem Speicher MEM verbunden, über den der Datentransfer vorgenommen wird.

Ein Datenaustausch zwischen den Datenübertragungs- und Verarbeitungseinheiten DAT1, DAT2, erfolgt folgendermaßen: Die Datenübertragungs- und Verarbeitungseinheit DAT1 überträgt nach Verbindung VERB mit dem Multiportbereich MUPO ein Datenpaket - beispielsweise ein Wort - in einen bestimmten Speicherplatz des Speichers MEM. Dem Datenpaket ist die Information vorangestellt oder zugefügt, daß es für die zweite Datenübertragungs- und Verarbeitungseinheit DAT2 bestimmt ist. Bei einer späteren Verbindung der zweiten Datenübertragungs- und Verarbeitungseinheit DAT2 mit dem Multiportbereich MUPO liest die Einheit DAT2 aus dem Speicher MEM das Datenpaket aus.

Anstelle oder zusätzlich könnte neben dem Speicher MEM auch eine oder mehrere Ausgabeschnittstellen an den Multiportbus BUSM angeschlossen sein. In diesem Falle müßte durch Erhöhung des Steueraufwandes (zusätzliche Signale) die zielrichtige Übertragung der Daten gewährleistet werden.

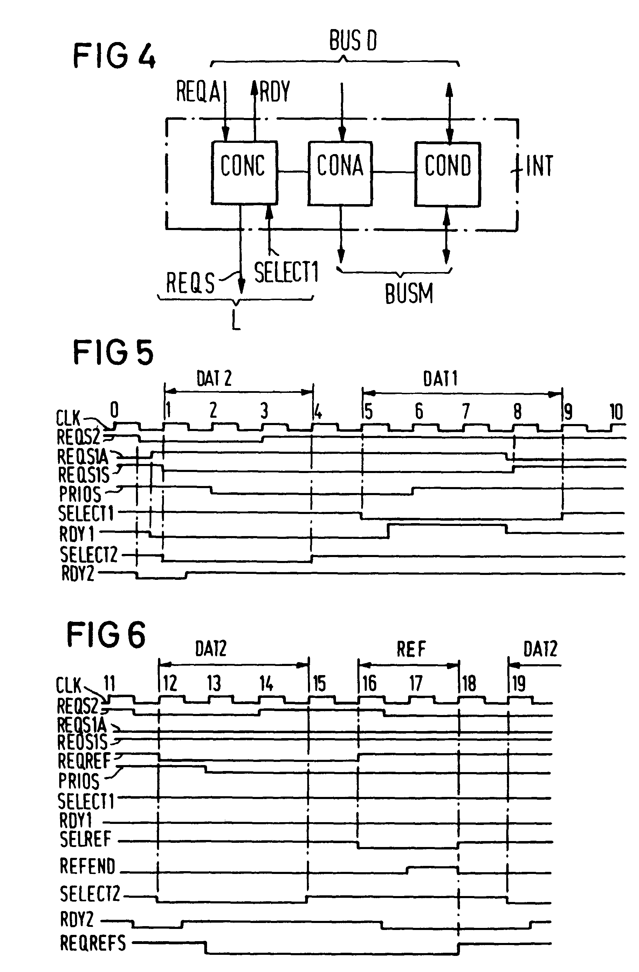

FIG 4 zeigt einen Schnittstellenbaustein INT. Die Verbindungen des Schnittstellenbausteins INT mit dem Multiportbus BUSM, dem Bus BUSD einer Datenübertragungs- und Verarbeitungseinheit DAT und den Steuerleitungen L zur Prioritätssteuerung PRIO sind aufgezeigt. Der Schnittstellenbaustein enthält drei Umsetzer CON.

Ein Datenumsetzer COND synchronisiert die zu übertragenden Daten und nimmt gegebenenfalls eine Pegelanpassung vor. Ein Adreßumsetzer CONA bereitet vom Bus BUSD kommende Adressen den Bedürfnissen des Speichers MEM entsprechend auf. Ein Steuersignalumsetzer CONC übernimmt neben der pegel- und zeitgerechten Umsetzung der Steuersignale auch die Erzeugung der Quittungssignale. Dadurch ist gewährleistet, daß asynchron zum Multiportbereich MUPO arbeitende Datenübertragungs- und Verarbeitungseinheiten DAT Quittungssignale in den für sie vorgeschriebenen Zeitintervallen erhalten.

Ein Anforderungssignal REQA kommt asynchron am entsprechenden Eingang des Steuersignalumsetzers CONC an. Dieser synchronisiert das Anforderungssignal REQA zu einem synchronen Anforderungssignal REQS und gibt es zur Prioritätssteuerung PRIO weiter. Das asynchron ankommende Anforderungssignal REQA wird zusätzlich beispielsweise über eine Verzögerungsschaltung oder direkt zur anfordernden Datenübertragungs- und Verarbeitungseinheit DAT als Quittungssignal RDY zurückgeschleift. Die Zeitverzögerung ist dabei so eingestellt, daß das rückgeschleifte Quittungssignal RDY zeitrichtig bei der Datenübertragungs- und Verarbeitungseinheit DAT ankommt. Ein Auswahlsignal SELECT1 wird nach Prioritätsfeststellung von der Prioritätssteuerung PRIO erzeugt und an den Steuersignalumsetzer CONC abgegeben. Das zweite Quittungssignal RDY1 wird in Form eines Pegelwechsels des ersten Quittungssignals RDY1 als Startsignal für die Datenübertragung zur Datenübertragungs- und Verarbeitungseinheit DAT1 übermittelt. Ferner wird das Auswahlsignal SELECT1 zu den anderen beiden Umsetzern CONA, COND geführt, wo es die Ein- und Ausgänge aktiviert. Aktivieren heißt in diesem Zusammenhang beispielsweise, daß die Ein- und Ausgänge vom Tristate-Zustand in einen leitungspegelabhängigen Zustand gelangen. Die Anforderung ANF ist beendet, wenn das Anforderungssignal REQA seinen Anfangspegel wieder einnimmt. Aufgrund dieses Pegelwechsels wird im Steuersignalumsetzer CONC ein drittes Quittungssignal RDY1 erzeugt. Dies wirkt sich beispielsweise dadurch aus, daß der Ausgang, an dem der Steuersignalumsetzer CONC das Quittungssignal an die Datenübertragungs- und Verarbeitungseinheit DAT abgibt, in den Tristate-Zustand geschaltet wird. Der Tristate-Zustand ist im Falle der ersten Datenübertragungs- und Verarbeitungseinheit DAT1 gemäß FIG 3 unbedingt erforderlich, da auf den dieser Einheit DAT1 zugeordneten Bus BUSD1 auch andere Steuereinheiten HDC zugreifen.

FIG 5 zeigt ein Impulsdiagramm der Signale, die an der Vergabe VERB des Zugriffs der beiden Datenübertragungs- und Verarbeitungseinheiten DAT1, DAT2 auf den Multiportbereich MUPO beteiligt sind. Die erste Zeile zeigt den Takt CLK des Multiportbereichs MUPO. Die positiven Flanken dieses Taktes CLK sind mit den Nummern 0 bis 10 bezeichnet. In den folgenden Zeilen sind die Signalverläufe für ein Anforderungssignal REQS2 der zweiten Datenübertragungs und Verarbeitungseinheit DAT2, ein asynchrones Anforderungssignal REQS1A und ein synchrones Anforderungssignal REQS1S der ersten Datenübertragungs- und Verarbeitungseinheit DAT1 gezeigt. Danach folgt der Verlauf eines Prioritätssignals PRIOS, eines Auswahlsignals SELECT1 für die erste Einheit DAT1, eines Quittungssignals RDY1 für die erste Einheit DAT1, eines zweiten Auswahlsignals SELECT2 für die zweite Einheit DAT2 und eines Quittungssignals RDY2 für die zweite Einheit DAT2.

Die erste Datenübertragungs- und Verarbeitungseinheit DAT1 arbeitet asynchron zum Takt des Multiportbereichs MUPO und die zweite Datenübertragungs- und Verarbeitungseinheit DAT2 arbeitet synchron zum Takt CLK des Multiportbereichs MUPO. Beide Einheiten DAT1, DAT2 fordern mit Hilfe ihrer Anforderungssignale REQS2, REQS1A zwischen den beiden positiven Taktflanken 0 und 1 einen Zugriff auf den Multiportbereich MUPO an. Die Multiportsteuerung MUST reagiert auf diese Anforderungen ANF im Idealfall gleichzeitig mit dem Eintreffen der Anforderungssignale REQS2, REQS1A durch einen Pegelwechsel der Quittungssignale RDY1 und RDY2. So wechselt das Quittungssignal RDY1 von einem Tristate-Zustand in den Pegelzustand "low". Das Quittungssignal RDY2 wechselt von einem Pegelzustand "high" in einen Pegelzustand "low". Das Prioritätssignal PRIOS ist aus den Informationen abgeleitet, die in der Prioritätsliste PLIS enthalten sind. Zu Beginn, also im Bereich der Taktflanke 0, hat dieses Signal PRIOS den Pegelzustand "high". Dies bedeutet, daß der Zeiger AR der Prioritätsliste PLIS auf die Nummer D2 der zweiten Datenübertragungs- und Verarbeitungseinheit DAT2 weist. Diese Einheit DAT2 hat also höchste Priorität. Dementsprechend wird mit der Taktflanke 1 das zweite Auswahlsignal SELECT2 vom Zustand "high" in den Zustand "low" geschaltet und damit der Schnittstellenbaustein INT2 aktiviert und über einen Pegelwechsel des Quittungssignals RDY2 von "low" nach "high", der zwischen den beiden Taktflanken 1 und 2 erfolgt, die Datenübertragung zwischen der zweiten Datenübertragungs- und Verarbeitungseinheit DAT2 und dem Multiportbereich MUPO ermöglicht. Während dieses Zugriffs ZUG wird die Prioritätsliste PLIS aktualisiert. Erkennbar ist dies am Verlauf des Prioritätssignals PRIOS. Dieses wechselt mit der Taktflanke 2 von "high" nach "low". Der Zeiger AR der Prioritätsliste PLIS weist nun auf den Speicherplatz, in dem die Nummer D1 der ersten Datenübertragungs- und Verarbeitungseinheit DAT1 eingetragen ist. Diese Einheit DAT1 hat also bei der nächsten Auswahl die höchste Priorität. Mit der dritten Taktflanke wechselt das Anforderungssignal REQS2 seinen Pegelzustand von "low" nach "high". Dies wird von der Prioritätssteuerung PRIO als Zeichen für ein Ende der Anforderung EANF gewertet. Die Verbindung wird mit der nächsten Taktflanke 4 getrennt. Dies wird durch einen Wechsel des zweiten Auswahlsignals SELECT2 ebenfalls mit der vierten Taktflanke vorgenommen.

Einem Zugriff ZUG der ersten Datenübertragungs- und Verarbeitungseinheit DAT1, die jetzt höchste Priorität hat, steht nichts mehr im Wege. Bereits mit der Taktflanke 5 erzeugt die Prioritätssteuerung PRIO das erste Auswahlsignal SELECT1. Die entsprechenden Schnittstellenbausteine INT1 werden aktiviert und die Datenübertragung wird durch einen Wechsel des Quittungssignals RDY1 von "low" nach "high" eingeleitet. Mit der sechsten Taktflanke wechselt das Prioritätssignal PRIOS wieder von "low" nach "high". Zwischen den Taktflanken 7 und 8 wechselt das asynchrone Anforderungssignal REQS1A von "high" nach "low" und signalisiert damit das Ende der Anforderung. Der Multiportbereich reagiert im Idealfall sofort darauf, indem das Quittungssignal RDY1 vom Zustand "high" in den "Tristate-Zustand" wechselt. Die Datenübertragungs- und Verarbeitungseinheit DAT1 kann sich also sofort anderen Aufgaben zuwenden und ist durch den abgearbeiteten Verbindungswunsch mit dem Multiportbereich MUPO nicht mehr behindert. Das asynchrone Anforderungssignal REQS1A wird zudem synchronisiert, so daß das synchrone Anforderungssignal REQS1S mit der Taktflanke 8 vom Zustand "low" in den Zustand "high" wechselt. Mit der nachfolgenden Taktflanke 9 wechselt auch das erste Auswahlsignal SELECT1 von "low" nach "high", wodurch für die Multiportsteuerung MUST der Zugriff beendet ist.

FIG 6 zeigt ein Impulsdiagramm, in dem Zugriffe aus zwei unterschiedlichen Prioritätsebenen dargestellt sind. Zum einen finden Zugriffe der zweiten Datenübertragungs- und Verarbeitungseinheit DAT2 statt und zum anderen wird ein "Refresh-Zugriff" REF aus einer höheren Prioritätsebene durchgeführt. Der "Refresh-Zugriff" REF ist beispielsweise dann notwendig, wenn der Speicher MEM des Multiportbereichs MUPO ein dynamischer Speicher ist.

Bei dynamischen Speichern ist es zwingend erforderlich, in bestimmten Zeitintervallen, beispielsweise 15 μ sec, die in ihm enthaltenen Daten aufzufrischen, also den sogenannten "Refresh" vorzunehmen. Findet dieser "Refresh" nicht statt, könnten Dateninhalte verlorengehen. Während des Ablaufs eines "Refresh-Zyklus" ist gleichzeitig kein Zugriff auf den Speicher möglich. Auf Grund dieser Anforderungen ist es zweckmäßig, die "Refresh-Anforderung" einer höheren Prioritätsebene zuzuordnen als die sonstigen Speicherzugriffe.

Anforderungssignale REFREQ für einen "Refresh" werden auch in einheitlichen Bus-Systemen (z.B. AT-Bus) bereitgestellt. Diese Anforderungssignale REFREQ liegen aber nur begrenzte Zeit vor. Deshalb ist es im vorliegenden Fall zweckmäßig, das Anforderungssignal REFREQ zwischenzuspeichern, um sicherzustellen, daß aufgrund der Prioritätsfolge kein "Refresh" verlorengeht. Ein solches Refreshspeichersignal REQREFS ist in FIG 6 eingezeichnet.

Ferner zeigt das in FIG 6 dargestellte Impulsdiagramm übereinander angeordnet mehrere Signalverläufe auf. In der ersten Zeile ist wiederum der Systemtakt CLK aufgezeigt. Die positiven Taktflanken sind mit den Nummern 11 bis 19 bezeichnet. Ein "Refresh-Zugriff" REF und zwei dargestellte Zugriffe der zweiten Datenübertragungs- und Verarbeitungseinheit DAT2 werden synchron angefordert, d.h. asynchrone Anforderungssignale REQA sind in FIG 6 für diese beiden Anforderungen nicht vorgesehen, jedoch in anderen Anwendungsfällen durchaus möglich. Unterhalb der Zeile, in der der Systemtakt CLK dargestellt ist, sind die Verläufe des Anforderungssignals REQS2 der zweiten Datenübertragungs- und Verarbeitungseinheit DAT2, sowie die Anforderungs-, Auswahl- und Quittungssignale REQS1A, REQS1S, SELECT1, RDY1 dargestellt. Diese Signale befinden sich in dem Zustand, den sie bei Taktflanke 10 in FIG 5 erreicht haben und verändern sich, wie aus FIG 6 ersichtlich, nicht. Des weiteren sind in FIG 6 die Verläufe eines "Refresh-Anforderungssignals" REQREF, des Prioritätssignals PRIOS eines "Refresh-Auswahlsignals" SELREF, eines "Refresh-Endesignals" REFEND, des zweiten Auswahlsignals SELECT2 und des Quittungssignals RDY2 dargestellt.

Mit der negativen Taktflanke zwischen den positiven Taktflanken 11 und 12 wechselt das zweite Anforderungssignal REQS2 von "high" nach "low". Die unmittelbare Antwort darauf ist der Wechsel des Quittungssignals RDY2 von "high" nach "low". Da der Pegel des Prioritätssignals PRIOS "high" ist und vor der Taktflanke 12 keine weitere Anforderung ANF vorliegt, wird mit der zwölften Taktflanke eine Verbindung der zweiten Datenübertragungs- und Verarbeitungseinheit DAT2 mit dem Multiportbereich hergestellt. Das zweite Auswahlsignal SELECT2 wechselt mit der zwölften Taktflanke von "high" nach "low". Der Schnittstellenbaustein INT2 wird aktiviert, und mit der negativen Taktflanke zwischen den positiven Taktflanken 12 und 13 wechselt das zweite Quittungssignal seinen Zustand von "low" nach "high". Ebenfalls mit Taktflanke 12 wechselt der Pegel des "Refresh-Anforderungssignals" REQREF von "high" nach "low". Zu diesem Zeitpunkt läuft aber bereits der Zugriff der zweiten Datenübertragungs- und Verarbeitungseinheit DAT2. Trotz der höheren Prioritätsebene des "Refreshs" REF wird der laufende Zugriff ZUG regulär beendet, während das "Refresh-Anforderungssignal" REQREF durch das "Refresh-Speichersignal" REQREFS durch Pegelwechsel mit Taktflanke 13 von "high" nach "low" gespeichert wird. Durch einen Wechsel des zweiten Anforderungssignals REQS2 mit der Taktflanke 14 von "low" nach "high" wird das Beenden der Verbindung signalisiert und mit Taktflanke 15 und einem Wechsel des zweiten Auswahlsignals SELECT2 von "low" nach "high" beendet. Höchste Priorität unter den Datenübertragungs- und Verarbeitungseinheiten hat nach dem Zugriff der zweiten Einheit DAT2 die erste Einheit DAT1. Signalisiert wird dieser Zustand durch den "low"-Pegel des Prioritätssignals PRIO, in den es mit Taktflanke 13 übergegangen ist.

Mit der Taktflanke 16 wird der Zugriff auf den Multiportbereich MUPO dem "Refresh" REF des Speichers MEM zugeteilt. Erkennbar ist diese Zuteilung durch einen Pegelwechsel des "Refresh-Auswahlsignals" SELREF mit der Taktflanke 16 von "high" nach "low". Ein Pegelwechsel des "Refresh-Endesignals" REFEND mit der Taktflanke 17 von "low" nach "high" signalisiert das Ende des "Refresh-Zyklus", das mit Taktflanke 18, bei der ein Pegelwechsel von "low" nach "high" des "Refresh-Auswahlsignals" SELREF, ein Pegelwechsel des "Refresh-Endesignals" REFEND von "high" nach "low" und ein Pegelwechsel des "Refresh-Speichersignals" REQREFS von "low" nach "high" stattfinden.

Bereits mit der negativen, zwischen den Taktflanken 16 und 17 liegenden Taktflanke wechselt das zweite Anforderungssignal REQS2 von "high" nach "low" und zeigt damit eine Anforderung der zeiten Datenübertragungs- und Verarbeitungseinheit DAT2 an. Da der Zugriff auf den Multiportbereich MUPO zu diesem Zeitpunkt aber vergeben ist, kann die zweite Datenübertragungs- und Verarbeitungseinheit DAT2 frühestens mit der Taktflanke 19 auf den Multiportbereich MUPO zugreifen. Die zweite Einheit DAT2 hat zu diesem Zeitpunkt zwar nicht die höchste Priorität, es liegen jedoch keine anderen Anforderungen vor, so daß einer Verbindung mit der Taktflanke 19 nichts im Wege steht. Wie bereits bei den vorhergehenden Zugriffen der zweiten Einheit DAT2 wechseln das zweite Auswahlsignal SELECT2 und das Quittungssignal RDY2 bei den entsprechenden Taktflanken ihre Pegel. Anzumerken ist, daß das Prioritätssignal PRIOS weder nach dem "Refresh-Zugriff" noch nach dem zweiten Zugriff der Datenübertragungs- und Verarbeitungseinheit DAT2 seinen Zustand wechselt. Das liegt daran, daß dieses Prioritätssignal PRIOS nur die Prioritäten innerhalb der niedrigeren Prioritätsebene vergibt, und daß nach Zugriff einer bestimmten Einheit stets eine andere bestimmte Einheit die höchste Priorität zugeteilt bekommt.

Für die praktische Realisierung der Prioritätssteuerung wird im folgenden ein Beispiel gegeben. Bei einer angenommenen Frequenz des Multiportbereichstaktes CLK von 10 MHz scheint es nicht vorteilhaft, das Vergabeverfahren mittels Software durch einen Prozessor durchzuführen. Eine schnelle und kostengünstige Methode der Steuerung ist die Verwendung von PAL-Bausteinen. Diese können mit Hilfe von dem Fachmann bekannten Programmiermethoden so eingestellt werden, daß bestimmte Pegelzustände von Eingangssignalen einen bestimmten Pegelzustand eines oder mehrerer Ausgangssignale bewirken. Die PAL-Bausteine enthalten eine Vielzahl von logischen Grundgattern, beispielsweise UND, ODER und NICHT. Diese logischen Grundgatter werden durch die Programmierung so verbunden, daß die gewünschten logischen Funktionen erreicht werden. Am Beispiel des ersten Auswahlsignals SELECT1 sieht man, wie eine Gleichung zur Programmierung des PAL-Bausteins aussehen kann. In der Gleichung bedeuten:

    & = AND
    + = OR
    / = NOT

$$/SELECT1 = /REQS1S \text{ \& } SELECT2 \text{ \& } REQREF \text{ \& } REQREFS \text{ \& } /PRIOS +$$

$$+/REQS1S \text{ \& } REQS2 \text{ \& } REQREF \text{ \& } REQREFS \text{ \& } PRIOS +$$

$$+/REQS1S \text{ \& } /SELECT1$$

In der ersten Zeile obiger Gleichung sind diejenigen Signale verknüpft, die sicherstellen, daß ein Zugriff der ersten Datenübertragungs- und Verarbeitungeinheit DAT1 auf den Multiportbereich MUPO nur dann stattfindet, wenn dieser Einheit DAT1 die höchste Priorität zugeteilt ist. Gleichzeitig ist sichergestellt, daß kein aktueller Zugriff der zweiten Einheit DAT2 und auch keine Anforderung bzw. Zugriff aus einer höheren Prioritätsebene vorliegt. Die zweite Zeile obiger Gleichung gibt den Zugriff der ersten Einheit DAT1 auf den Multiportbereich MUPO nur dann frei, wenn weder eine Anforderung noch ein Zugriff aus einer höheren Prioritätsebene, noch eine Anforderung aus der gleichen Prioritätsebene mit höherer Priorität vorliegt. Die dritte Zeile der Gleichung stellt sicher, daß der Zugriff der ersten Einheit DAT1 solange andauert, wie die Anforderung dieser Einheit DAT1 andauert.

Sind M+1-Datenübertragungs- und Verarbeitungseinheiten DAT an den Multiportbereich MUPO angeschlossen, dann muß obige Gleichung entsprechend erweitert werden. In der allgemeinen Gleichung für den X-ten von M+1-Teilnehmern innerhalb einer Prioritätsebene mit einem Signal Q zeigt, welche der Datenübertragungs- und Verarbeitungseinheiten DAT aktuell die höchste Priorität innehat. Hat beispielsweise die vierte Datenübertragungs- und Verarbeitungseinheit DAT4 höchste Priorität, dann lautet das Signal: Q (5). Eine Bedingung in der im folgenden dargestellten allgemeinen Gleichung für die X-te von M+1 Datenübertragungs- und Verarbeitungseinheiten DAT muß immer erfüllt sein. Die Einheit DATX darf nur mit dem Multiportbereich MUPO verbunden werden, wenn der Multiportbereich MUPO aktuell mit keiner anderen Datenübertragungs- und Verarbeitungseinheit DAT verbunden ist. Diese Bedingung wird durch folgenden String zum Ausdruck gebracht.

$$SELX = /REQSX \text{ \& } (SELECT(X+1) \text{ \& } SELECT(X+2) \text{ \& } ... \text{ \& } SELECT(M)$$

$$\text{\& } SELECT(X-1) \text{ \& } SELECT(X-2) \text{ \& } ... \text{ \& } SELECT(0))$$

Die allgemeine Gleichung lautet nun:

$$SELECTX = SELX \text{ \& } Q(X) +$$

$$+SELX \text{ \& } Q(X-1) + REQS(X-1) +$$

$$+SELX \text{ \& } Q(X-2) \text{ \& } REQS(X-1) \text{ \& } REQS(X-2) +$$

$$\vdots$$

$$\vdots$$

$$\vdots$$

$$+SELX \text{ \& } Q(1) \text{ \& } REQS(X-1) \text{ \& } ... \text{ \& } REQS(2) \text{ \& } REQS(1)$$

$$+SELX \text{ \& } Q(0) \text{ \& } REQS(X-1) \text{ \& } REQS(X-2) \text{ \& } ... \text{ \& } REQS(1) \text{ \& } REQS(0) +$$

+SELX & Q(M) & REQS(X-1) & REQS(X-2) & ... & REQS(1)& & REQS(0) & REQS(M) +

+SELX & Q(M-1) & REQS(X-1) & REQS(X-2) & ... & REQS(0)& & REQS(M) & REQS(M-1) +

+SELX & Q(M-2) & REQS(X-1) & REQS(X-2) & ... & REQS(0)& & REQS(M-1) & REQS(M-2) +

:

:

:

+SELX & Q(X+2) & REQS(X-1) & REQS(X-2) & ... & REQS(0)& & REQS(M-1) & REQS(M-2) & ... & REQS(X+2) +

+SELX & Q(X+1) & REQS(X-1) & REQS(X-2) & ... & REQS(0)& & REQS(M-1) & REQS(M-2) & ... & REQS(X+2) & REQS(X+1) +

+/SELECTX & /REQS(X)

In obiger Gleichung ist zu beachten, daß "O" die kleinste Nummer und "M" die höchste Nummer der an den Multiportbereich MUPO angeschlossenen Datenübertragungs- und Verarbeitungseinheiten DAT ist. Die erste Zeile der Gleichung ist erfüllt, wenn die Einheit DATX höchste Priorität hat, die zweite Zeile ist erfüllt, wenn die Einheit DATX die zweithöchste Priorität hat und keine höherprioren Anforderungen anstehen, die dritte Zeile ist erfüllt, wenn die Einheit DATX die dritthöchste Priorität hat und keine höherprioren Anforderungen anstehen, die vierte Zeile ist erfüllt, wenn die Einheit DATX die X-höchste Priorität hat und keine höherprioren Anforderungen anstehen, die fünfte Zeile ist erfüllt, wenn die Einheit DATX die X+1-höchste Priorität hat und keine höherprioren Anforderungen anstehen, die sechste Zeile ist erfüllt, wenn die Einheit DATX die X+2-höchste Priorität hat, die siebte Zeile ist erfüllt, wenn die Einheit DATX die X+3-höchste Priorität hat, die achte Zeile ist erfüllt, wenn die Einheit DATX die X+4-höchste Priorität hat, die neunte Zeile ist erfüllt, wenn die Einheit DATX die M-höchste Priorität hat, die zehnte Zeile ist erfüllt, wenn die Einheit DATX die M+1-höchste (= niedrigste) Priorität hat. Die elfte Zeile der Gleichung sorgt dafür, daß die Verbindung bestehen bleibt, solange die Anforderung aufrechterhalten wird.

Es folgt nun ein Beispiel für einen Multiportbereich MUPO, an den fünf Datenübertragungs- und Verarbeitungseinheiten DAT angeschlossen sind. Beispielhaft wird die Gleichung für das Auswahlsignal SELECT4 der vierten Datenübertragungs- und Verarbeitungseinheit DAT4 angegeben. Als Prioritätsliste in diesem Anwendungsfall dient ein Register mit einem Speicherumfang von drei Bit. Jedes Registerspeicherbit kann den Zustand "low" oder "high" annehmen. Ein Speicherplatz mit der Bezeichnung QBO hat die Wertigkeit $2^0$ im dualen Zahlensystem. Ein Speicherplatz QB1 hat die Wertigkeit $2^1$ im dualen Zahlensystem und ein Speicherplatz QB2 hat die Wertigkeit $2^2$ im dualen Zahlensystem. Die Registerspeicherplätze wechseln ihren logischen Zustand in Abhängigkeit folgener Gleichungen:

QB0=(/SELECT0 + /SELECT2) + QB0 & SELECT1 & SELECT3 & SELECT4;

QB1=(/SELECT1 + /SELECT2) + QB1 & SELECT0 & SELECT3 & SELELCT4;

QB2=/SELECT3 + QB2 & SELECT0 & SELECT1 & SELECT2 & SELELCT4;

Der String für die vierte Einheit DAT4, der sicherstellt, daß ein Zugriff nur vergeben wird, wenn keine andere Einheit auf DAT auf den Multiportbereich MUPO zugreift, lautet:

SEL4 = /REQS4 & SELECTO & SELECT1 & SELECT2 & SELECT3

Dieser String wird wiederum in die Gleichung für das Auswahlsignal SELECT4 der vierten Einheit DAT4 eingesetzt.

/SELECT4 = SEL4 & QB2 & /QB1 & /QB0 +

+SEL4 & /QB2 & QB1 & QB0 & REQS3 +

+SEL4 & /QB2 & QB1 & /QB0 & REQS3 & REQS2 +

+SEL4 & /QB2 & /QB1 & QB0 & REQS3 & REQS2 & REQS1 +

+SEL4 & /QB2 & /QB1 & /QB0 & REQS3 & REQS2 & REQS1 & REQS0 +

+/SELECT4 & /REQS4;

In der ersten Zeile obiger Gleichung hat die vierte Einheit DAT4 die höchste Priorität, in der zweiten Zeile hat die dritte Einheit DAT3 die höchste Priorität, in der dritten Zeile hat die zweite Einheit DAT2 die höchste Priorität, in der vierten Zeile hat die erste Einheit DAT1 die höchste Priorität und in der fünften Zeile hat die nullte Einheit DATO die höchste Priorität. Die sechste Zeile stellt wiederum sicher, daß das vierte Auswahlsignal SELECT4 solange gehalten wird, wie das Anforderungssignal REQS4 vorliegt.

## Patentansprüche

1. Verfahren zur zeitlichen Reihung von Zugriffen verschiedener, fortlaufend numerierter Datenübertragungs- und Verarbeitungseinheiten (DAT) auf einen eine Multiportsteuerung (MUST) enthaltenden Multiportbereich (MUPO), mit folgenden Verfahrensschritten:

   a) Eine Datenübertragungs- und Verarbeitungseinheit (DAT) übermittelt ein einen Zugriffswunsch anzeigendes Signal (REQS) zu einem dieser Datenübertragungs- und Verarbeitungseinheit (DAT) zugeordneten Anforderungseingang (REQ) der Multiportsteuerung (MUST).
   b) Die Multiportsteuerung (MUST) übermittelt ein Quittungssignal (RDY) an diese Datenübertragungs- und Verarbeitungseinheit (DAT), wodurch diese in einen Wartezustand versetzt wird.
   c) Vor Zugriffsvergabe auf den Multiportbereich (MUPO) durch die Multiportsteuerung (PRI0) werden parallel folgende Verfahrensschritte durchgeführt:
   Es wird geprüft, ob

   ca) aktuell kein Zugriff auf den Multiportbereich durch eine andere Datenübertragungs- und Verarbeitungseinheit (DAT) stattfindet,
   cb) gleichzeitig nur an solchen Anforderungseingängen (REQ) Signale zur Anzeige eines Zugriffswunsches verschiedener, der gleichen Prioritätsebene zugeordneter Datenübertragungs- und Verarbeitungseinheiten (DAT) auf den Multiportbereich (MUPO) vorliegen, die in einer aktuellen Prioritätsliste (PLIS) niedrigere Priorität haben,

   d) sind die unter c) genannten Bedingungen für die Datenübertragungs- und Verarbeitungseinheit (DAT) erfüllt, übermittelt die Multiportsteuerung (MUST) an diese Datenübertragungs- und Verarbeitungseinheit (DAT) ein zweites Quittungssignal (RDY), das einen Datenaustausch zwischen Datenübertragungs- und Verarbeitungseinheit (DAT) und Multiportbereich (MUPO) einleitet.
   e) Die Datenübertragungs- und Verarbeitungseinheit (DAT) übermittelt ein in seiner Länge so begrenztes Datenpaket an den Multiportbereich (MUPO), daß ein verschachtelter Zugriff von wenigstens zwei Datenübertragungs- und Verarbeitungseinheiten (DAT) auf den Multiportbereich (MUPO) möglich ist.
   f) Die Prioritätsliste (PLIS) der Prioritätssteuerung (PRIO) wird so aktualisiert, daß die aktuell mit dem Multiportbereich (MUPO) verbundene Datenübertragungs- und Verarbeitungseinheit (DAT) bis zum nächsten Zugriff einer Datenübertragungs- und Verarbeitungseinheit (DAT) auf den Multiportbereich (MUPO) die niedrigste, die Datenübertragungs- und Verarbeitungseinheit (DAT) mit der nachfolgenden Nummer die höchste und die nachfolgenden Datenübertragungs- und Verarbeitungseinheiten (DAT) gemäß ihrer Numerierung geordnete Prioritäten erhalten.
   g) Nach erfolgtem Datenaustausch übermittelt die Datenübertragungs- und Verarbeitungseinheit (DAT) ein den Zugriffswunsch beendendes Signal (REQS) an die Multiportsteuerung (MUST), die daraufhin den Zugriff beendet.

2. Verfahren nach Anspruch 1, **dadurch gekennzeichnet,** daß die Multiportsteuerung (MUST) aus einer die Prioritätsliste (PLIS) enthaltenden Prioritätssteuerung (PRIO) und wenigstens zwei Schnittstellenbausteinen (INT) besteht, daß die Prioritätssteuerung (PRIO) nach Prüfung der Zugriffsvergabebedingungen ein Auswahlsignal (SELECT) an den der ausgewählten Datenübertragungs- und Verarbeitungseinheit zugeordneten Schnittstellenbaustein (INT) überträgt, daß dieser Schnittstellenbaustein (INT) dadurch aktiviert wird und daß der Schnittstellenbaustein (INT) das zweite Quittungssignal (RDY) an die Datenübertragungs- und Verarbeitungseinheit (DAT) übermittelt.

3. Verfahren nach Anspruch 2, **dadurch gekennzeichnet**, daß der Empfang des den Zugriffswunsch beendenden Signals (REQS) in der Prioritätssteuerung (PRIO) das Rücksetzen des Auswahlsignals (SELECT) bewirkt, und daß dieses Rücksetzen den Schnittstellenbaustein (INT) deaktiviert.

4. Verfahren nach einem der vorhergehenden Ansprüche, **dadurch gekennzeichnet**, daß vor Zugriffsvergabe auf den Multiportbereich (MUPO) von der Prioritätssteuerung (PRIO) auch Anforderungseingänge (REQ), die anderen Prioritätsebenen zugeordnet sind, abgefragt werden und daß das Auswahlsignal (SELECT) zu dem Schnittstellenbaustein derjenigen Datenübertragungs- und Verarbeitungseinheit (DAT) übermittelt wird, die unter den anfordernden Datenübertragungs- und Verarbeitungseinheiten (DAT) der höchsten Prioritätsebene zugeordnet ist und innerhalb dieser Prioritätsebene die höchste Priorität hat.

5. Verfahren nach einem der vorhergehenden Ansprüche, **dadurch gekennzeichnet**, daß bei Asynchronität des Taktes einer Datenübertragungs- und Verarbeitungseinheit (DAT) und des Taktes des Multiportbereichs (MUPO) der der jeweiligen Datenübertragungs- und Verarbeitungseinheit zugeordnete Schnittstellenbaustein (INT) das einen Zugriffswunsch anzeigende Signal asynchron zum Takt des Multiportbereichs (MUPO) empfängt und das den Wartezustand in der Datenübertragungs- und Verarbeitungseinheit (DAT) auslösende Quittungssignal (RDY) unter Einhaltung der für die Datenübertragungs- und Verarbeitungseinheit (DAT) vorgeschriebenen Zeitintervalle asynchron übermittelt.

6. Verfahren nach Anspruch 5, **dadurch gekennzeichnet**, daß der Schnittstellenbaustein (INT) das den Zugriffswunsch beendende Signal (REQA) asynchron empfängt und daß der Schnittstellenbaustein (INT) daraufhin ein drittes Quittungssignal (RDY) an die Datenübertragungs- und Verarbeitungseinheit (DAT) überträgt.

7. Verfahren nach einem der vorhergehenden Ansprüche, **dadurch gekennzeichnet**, daß sämtliche Überprüfungen vor Zugriffsvergabe auf den Multiportbereich (MUPO) derart parallel durchgeführt werden, daß vom Zeitpunkt der Beendigung des vorhergehenden Zugriffs bis zum Beginn des Folgezugriffs maximal eine Taktperiode des Multiportbereichs vergeht.

**Claims**

1. Method of arranging in chronological order accesses by different, consecutively numbered data transmission and processing units (DAT) to a multiport area (MUPO) containing a multiport controller (MUST) having the following method steps:

   a) a data transmission and processing unit (DAT) transmits a signal (REQS), indicating an access request, to a request input (REQ) of the multiport controller (MUST) assigned to this data transmission and processing unit (DAT);
   b) the multiport controller (MUST) transmits an acknowledgement signal (RDY) to this data transmission and processing unit (DAT), whereby the latter is put into a waiting state;
   c) before access to the multiport area (MUPO) is awarded by the multiport controller (PRIO), the following method steps are carried out in parallel:
   it is checked whether

   ca) there is no access currently taking place to the multiport area by another data transmission and processing unit (DAT),
   cb) at the same time signals for indicating an access request to the multiport area (MUPO) by different data transmission and processing units (DAT) assigned to the same priority level are present only at those request inputs (REQ) which nave lower priority in a current priority list (PLIS),
   d) if the conditions mentioned under c) are met for the data transmission and processing unit (DAT), the multiport controller (MUST) transmits to this data transmission and processing unit (DAT) a second acknowledgement signal (RDY), which initiates an exchange of data between the data transmission and processing unit (DAT) and the multiport area (MUPO);

e) the data transmission and processing unit (DAT) transmits to the multiport area (MUPO) a data package which is limited in its length such that an interleaved access by at least two data transmission and processing units (DAT) to the multiport area (MUPO) is possible;

f) the priority list (PLIS) of the priority controller (PRIO) is updated such that the data transmission and processing unit (DAT) currently connected to the multiport area (MUPO) is given the lowest priority, the data transmission and processing unit (DAT) having the next-following number is given the highest priority and the next-following data transmission and processing units (DAT) are given priorities ordered according to their numbering up until the next access by a data transmission and processing unit (DAT) to the multiport area (MUPO);

g) once the exchange of data has taken place, the data transmission and processing unit (DAT) transmits a signal (REQS), ending the access request, to the multiport controller (MUST), which thereupon ends the access.

2. Method according to claim 1, characterized in that the multiport controller (MUST) comprises a priority controller (PRIO), containing the priority list (PLIS), and at least two interface modules (INT), in that, after checking the access award conditions, the priority controller (PRIO) transmits a selection signal (SELECT) to the interface module (INT) assigned to the selected data transmission and processing unit, in that this interface module (INT) is thereby activated and in that the interface module (INT) transmits the second acknowledgement signal (RDY) to the data transmission and processing unit (DAT).

3. Method according to claim 2, characterized in that reception in the priority controller (PRIO) of the signal (REQS) ending the access request effects the resetting of the selection signal (SELECT), and in that this resetting deactivates the interface module (INT).

4. Method according to one of the preceding claims, characterized in that, before access to the multiport area (MUPO) is awarded by the priority controller (PRIO), request inputs (REQ) which are assigned to other priority levels are also interrogated and in that the selection signal (SELECT) is transmitted to the interface module of that data transmission and processing unit (DAT) which is assigned to the highest priority level among the requesting data transmission and processing units (DAT) and has the highest priority within this priority level.

5. Method according to one of the preceding claims, characterized in that, if there is asynchronicity of the clock pulse of a data transmission and processing unit (DAT) and the clock pulse of the multiport area (MUPO), the interface module (INT) assigned to the respective data transmission and processing unit receives the signal indicating an access request asynchronously with respect to the clock pulse of the multiport area (MUPO) and transmits asynchronously the acknowledgement signal (RDY) triggering the waiting state in the data transmission and processing unit (DAT), while maintaining the time intervals prescribed for the data transmission and processing unit (DAT).

6. Method according to claim 5, characterized in that the interface module (INT) asynchronously receives the signal (REQA) ending the access request and in that the interface module (INT) thereupon transmits a third acknowledgement signal (RDY) to the data transmission and processing unit (DAT).

7. Method according to one of the preceding claims, characterized in that all the checks before access is awarded to the multiport area (MUPO) are carried out in parallel in such a way that, from the point in time at which the preceding access is ended to the beginning of the following access there elapses at most one clock pulse period of the multiport area.

**Revendications**

1. Méthode de mise en ordre chronologique des accès des différentes unités de transmission et traitement des données (DAT) numérotées en continu à une zone multiporte (MUPO) comportant une commande multiporte, avec les opérations de base suivantes:

a) Une unité de transmission et traitement des données (DAT) transmet un signal affichant un accès souhaité (REQS) à une entrée de demande (REQ) de la commande multiporte (MUST) attribuée à cette unité de transmission et traitement des données (DAT).

b) La commande multiporte (MUST) transmet un signal d'accusé de réception (RDY) à cette unité de transmission et traitement des données (DAT), ce qui fait que celle-ci est mise en état d'attente.

c) Les étapes suivantes sont exécutées en parallèle avant que la commande multiporte (PRIO) ne libère l'accès à la zone multiporte (MUPO): On vérifie : ca) si aucun accès à la zone multiporte (MUPO) par une autre unité de transmission et traitement des données (DAT) n'a lieu à ce moment,

cb) simultanément si des signaux pour l'affichage d'un accès souhaité à la zone multiporte (MUPO) provenant de différentes unités de transmission et traitement des données (DAT) associées au même niveau de priorité sont présents seulement sur ces entrées de demande (REQ) qui dans une liste actuelle de priorité (PLIS) ont une priorité basse.

d) Si les conditions mentionnées au point c) sont remplies pour l'unité de transmission et traitement des données (DAT), la commande multiporte (MUST) transmet à cette unité de transmission et traitement des données (DAT) un second signal d'accusé de réception (RDY), lequel amorce un échange de données entre l'unité de transmission et traitement des données (DAT) et la zone multiporte (MUPO).

e) L'unité de transmission et traitement des données (DAT) transmet à la zone multiporte (MUPO) un paquet de données d'une longueur limitée de telle manière qu'un accès à la zone multiporte (MUPO) entrelacé d'au moins deux unités de transmission et traitement des données (DAT) est possible.

f) La liste des priorités (PLIS) de la commande des priorités (PRIO) est actualisée de telle manière que l'unité de transmission et traitement des données (DAT) actuellement reliée à la zone multiporte (MUPO) reçoit, jusqu'au prochain accès d'une unité de transmission et traitement des données (DAT) à la zone multiporte (MUPO), la priorité la plus basse, l'unité de transmission et traitement des données (DAT) ayant le numéro suivant reçoit la plus haute priorité, et les unités de transmission et traitement des données (DAT) suivantes reçoivent des priorités dans l'ordre de leur numérotation.

g) Une fois l'échange de données effectué, l'unité de transmission et traitement des données (DAT) transmet un signal mettant fin à l'accès souhaité (REQS) à la commande multiporte (MUST) qui, sur ce, met fin à l'accès.

2. Procédé selon la revendication 1, **caractérisé** en ce que la commande multiporte (MUST) est composée d'une commande des priorités (PRIO) comportant une liste des priorités (PLIS) et d'au moins deux modules d'interface (INT), en ce que la commande des priorités (PRIO) transmet, après examen des conditions de libération d'accès, un signal de sélection (SELECT) au module d'interface (INT) attribué à l'unité de transmission et traitement des données sélectionnée, en ce que ce module d'interface (INT) est ainsi activé et en ce que le module d'interface (INT) transmet le second signal d'accusé de réception (RDY) à l'unité de transmission et traitement des données (DAT).

3. Procédé selon la revendication 2, **caractérisé** en ce que la réception du signal mettant fin à l'accès souhaité (REQS) entraîne la remise à zéro du signal de sélection (SELECT) dans la commande des priorités (PRIO), et en ce que ce retour du signal désactive le module d'interface (INT).

4. Procédé selon l'une quelconque des revendications précédentes, **caractérisé** en ce qu'également des entrées de demandes (REQ), qui sont attribuées à d'autres niveaux de priorité, sont interrogées avant que la commande des priorités (PRIO) ne libère l'accès à la zone multiporte (MUPO) et en ce que le signal de sélection (SELECT) est transmis au module d'interface de l'unité de transmission et traitement des données (DAT) qui parmi les unités de transmission et traitement des données (DAT) demandeuses est attribuée au plus haut niveau de priorité et qui a la plus haute priorité au sein de ce même niveau de priorité.

5. Procédé selon l'une quelconque des revendications précédentes, **caractérisé** en ce que si le cycle d'une unité de transmission et traitement des données (DAT) et le cycle de la zone multiporte (MUPO) sont asynchrones, le module d'interface (INT) attribué à l'unité de transmission et traitement des données correspondante reçoit le signal affichant un accès souhaité de manière asynchrone au cycle de la zone multiporte (MUPO) et transmet de manière asynchrone le signal d'accusé de réception (RDY) déclenchant l'état d'attente dans l'unité de transmission et traitement des données (DAT) en respectant les intervalles de temps prescrits pour l'unité de transmission et traitement des données (DAT).

6. Procédé selon la revendication 5, **caractérisé** en ce que le module d'interface (INT) reçoit le signal mettant fin à l'accès souhaité (REQA) de manière asynchrone et en ce qu'après quoi le module d'interface (INT) transmet un troisième signal d'accusé de réception (RDY) à l'unité de transmission et traitement des données (DAT).

7. Procédé selon l'une quelconque des revendications précédentes, **caractérisé** en ce que tous les contrôles sont exécutés en parallèle avant la libération de l'accès à la zone multiporte (MUPO) de telle manière qu'au maximum une période élémentaire de la zone multiporte s'écoule entre le moment de la fin de l'accès précédent et le début de l'accès suivant.

FIG 1

BOOT

ANF? — N

J

RDY

ZUG? — J

N

PLIS

VERB

EANF? — N

J

TREN

FIG 2

FIG 3

FIG 4

FIG 5

FIG 6